# EUROPÄISCHE PATENTSCHRIFT

(11) **EP 4 440 824 B1**
(45) Veröffentlichungstag und Bekanntmachung des Hinweises auf die Patenterteilung: **20.05.2026**
(21) Anmeldenummer: 22801991.5
(22) Anmeldetag: 02.11.2022
(51) Int. Cl.: B29C 73/16, B29L 30/00

(54) **DICHTMITTEL FÜR EINEN FAHRZEUGLUFTREIFEN, DICHTMITTELBEHÄLTER MIT EINEM SOLCHEN UND VERFAHREN ZUM PROVISORISCHEN ABDICHTEN VON FAHRZEUGLUFTREIFEN**
SEALING AGENT FOR A PNEUMATIC VEHICLE TIRE, SEALING AGENT CONTAINER CONTAINING SAME, AND METHOD FOR PROVISIONALLY SEALING A PNEUMATIC VEHICLE TIRE
AGENT D'ÉTANCHÉITÉ POUR PNEUMATIQUE DE VÉHICULE, RÉCIPIENT D'AGENT D'ÉTANCHÉITÉ LE CONTENANT ET PROCÉDÉ D'ÉTANCHÉITÉ PROVISOIRE D'UN PNEUMATIQUE DE VÉHICULE

(30) Priorität: 30.11.2021 DE 102021213509
(43) Veröffentlichungstag der Anmeldung: 09.10.2024
(73) Patentinhaber: Continental Reifen Deutschland GmbH, 30175 Hannover (DE)
(72) Erfinder: DAHLKE, Markus, 30175 Hannover (DE)
(74) Vertreter: Continental Corporation
(86) Internationale Anmeldenummer: PCT/DE2022/200251
(87) Internationale Veröffentlichungsnummer: WO 2023/098952

(56) Entgegenhaltungen:
- DE-T5- 112016 001 538
- US-A1- 2015 337 155
- US-A1- 2017 066 206

## Beschreibung

Die Erfindung betrifft ein Dichtmittel zum provisorischen Abdichten von Fahrzeugluftreifen gemäß dem Oberbegriff des Patentanspruchs 1 sowie ein Dichtmittelbehälter mit einem solchen Dichtmittel gemäß dem Oberbegriff des Patentanspruchs 7. Ferner betrifft die Erfindung ein Verfahren zum provisorischen Abdichten eines Fahrzeugluftreifens unter Verwendung wenigstens eines solchen Dichtmittels gemäß dem Oberbegriff des Patentanspruchs 8.

Fahrzeugluftreifen können beim Überfahren von spitzen Gegenständen Schäden in Form von Rissen erleiden, die zum Luftdruckverlust im Reifen führen. Um solche Schäden zumindest provisorisch, d.h. für eine gewisse Zeitdauer bis zum Austausch des Fahrzeugreifens, möglichst sicher abzudichten, sind Abdichtmittel oder Dichtmittel im Stand der Technik bekannt, die nach dem Herausschrauben des Ventileinsatzes oder direkt über das Ventil in den Reifen beispielsweise mit Hilfe eines Pannenhilfesets eingebracht werden. Ein solches Pannenhilfeset weist üblicherweise eine Druckquelle und einen Dichtmittelbehälter oder zumindest einen Anschluss für einen Dichtmittelbehälter auf. Alternativ wird das Dichtmittel durch den Benutzer direkt aus dem Behälter in den Reifen gedrückt.

Die DE 112010000061 T9 offenbart beispielsweise ein Dichtmittel für Reifenlöcher, welches einen Tensidgehalt zwischen 1,0 und 6,0 Massenprozent eines Feststoffgehalts des Naturkautschuklatex umfasst. Ein solches Dichtmittel zeigt erhöhte Lagerfähigkeiten auf, wobei das Tensid zugleich ein Faktor ist, der einen Verlust an Dichtleistung herbeiführt.

Weitere Dichtmittel gemäß dem Stand der Technik werden in den Druckschriften US 2015/337155 A1, die ein Dichtmittel mit hohem Kautschuklatexanteil beschreibt, DE 11 2016 001538 T5 und US 2017/066206 A1, die Dichtmittel mit hohen Harzanteilen beschreiben, offenbart.

Eine wesentliche Eigenschaft eines Dichtmittels für das Abdichten von Fahrzeugluftreifen ist das diametrale Verhalten der Eigenschaften Ventilverstopfen und Abdichtleistung, welche sich mit zunehmender Alterung des Dichtmittels verändern. So zeigt frisch ein hergestelltes Dichtmittel eine Tendenz zum Ventilverstopfen, dichtet aber zuverlässig ab. Gealtertes Dichtmittel zeigt kaum Ventilverstopfen, dichtet aber unzuverlässiger ab.

Hier setzt die vorliegende Erfindung an. Die vorliegende Erfindung liegt der Aufgabe zu Grunde, ein Dichtmittel bereitzustellen, welches verbesserte Eigenschaften bezüglich der Einsetzbarkeit, insbesondere in Bezug auf das beschrieben diametrale Verhalten, aufzeigt. Ferner ist die Aufgabe der vorliegenden Erfindung einen Dichtmittelbehälter mit einem Dichtmittel bereitzustellen, durch welches die Einsetzbarkeit des Dichtmittelbehälters verbessert wird. Außerdem liegt der Erfindung die Aufgabe zu Grunde, ein Verfahren zum provisorischen Abdichten eines Fahrzeugluftreifens bereitzustellen, durch das die Einsetzbarkeit, insbesondere in Bezug auf das diametrale Verhalten, verbessert wird.

Die Aufgabe der Erfindung wird durch ein Dichtmittel zum provisorischen Abdichten von Fahrzeugluftreifen mit den Merkmalen des Anspruchs 1 gelöst. Ferner wird die Aufgabe durch ein Dichtmittelbehälter mit den Merkmalen des Anspruchs 7 sowie durch die Verwendung des Dichtmittels gemäß Anspruch 8 gelöst.

Gelöst wird die Aufgabe der Erfindung durch ein Dichtmittel zum provisorischen Abdichten von Fahrzeugluftreifen, umfassend zumindest einen Kautschuklatex, zumindest ein Harz und zumindest ein Tensid, wobei der Feststoffgehalt des Tensids im Bereich von 6,5 Gew.-% bis 12 Gew.-% im Verhältnis zum Feststoffgehalt des Kautschuklatex liegt.

Vorteilhafterweise zeigt das erfindungsgemäße Dichtmittel ein deutlich verbessertes diametrales Verhalten bezüglich der Eigenschaften Ventilverstopfen und Abdichtleistung auf. Es hat sich herausgestellt, dass der erfindungsgemäße Feststoffgehalt des Tensids im Verhältnis zum Latex und zum Harz optimal bezüglich der Eigenschaften von Ventilverstopfen und Abdichtleistung ist, sodass das Dichtmittel für eine lange Zeit zuverlässige Abdichteigenschaften aufzeigt und zugleich zuverlässiger in Bezug auf das Ventilverstopfen ist. Insgesamt ist die Einsetzbarkeit des erfindungsgemäßen Dichtmittels benutzerfreundlicher und somit deutlich besser als das von Dichtmitteln im Stand der Technik. Ferner ist der Einsatz eines erfindungsgemäßen Dichtmittels für den Benutzer kostengünstiger, da dieser durch eine verbesserte Abdichtleistung im Vergleich zum Stand der Technik wenig Dichtmittel einsetzen muss.

Sämtliche Gewichtsangaben beziehen sich, wenn nicht anders angegeben, auf die Gesamtmenge an Dichtmittel beziehungsweise auf die Gesamtmenge an Mittel zum provisorischen Abdichten von Fahrzeugluftreifen.

In einer Ausführungsform der Erfindung liegt der Feststoffgehalt des Tensids im Bereich von 7 Gew.-% bis 11 Gew.-%, bevorzugt im Bereich von 8 Gew.-% bis 10 Gew.-%. Vorteilhaft ist, dass das Dichtmittel mit einem solchen ausgewählten Bereich oder bevorzugten Bereich ein noch besseres diametrales Verhalten aufzeigt.

In einer weiteren Ausführungsform der Erfindung umfasst das mindestens eine Tensid ein Block-Copolymer von Propylenoxid und Ethylenoxid, wobei der Anteil an Ethylenoxid bevorzugt 40 Gew.-% beträgt. Es hat sich vorteilhafterweise herausgestellt, dass ein solches Block-Copolymer zu einem deutlich besseren diametralen Verhalten des Dichtmittels bezüglich der Eigenschaften Ventilverstopfen und Abdichtleistung führt.

In einer bevorzugten und/oder weiteren Ausführungsform umfasst das mindestens eine Tensid ein oder mehrere Sulfonate, insbesondere anionische Mono- oder Di-Sulfonate und/oder mindestens ein Alkylethersulfat, wie beispielsweise Natriumalkylphenolpolyethylenglykolethersulfat und wenigstens ein sterisches Tensid. Ein großer Vorteil ist, dass Sulfonate zu einem deutlich besseren diametralen Verhalten bezüglich der Eigenschaften Ventilverstopfen und Abdichtleistung aufzeigen. Weiter vorteilhaft ist, dass diese gute Schaumbildner sind, wodurch das Abdichten im Fahrzeugluftreifen deutlich verbessert wird. Sterische Tenside zeigen in Bezug auf das Dichtmittel eine gute viskositäts- und schaumregulierende Wirkung.

Bevorzugt enthält das Dichtmittel zwei Tenside, wobei der Gesamtanteil des ersten und zweiten Tensids im Bereich von 0,5 bis 2 Gew.-% liegt. Vorteilhafterweise können die beiden Tenside untereinander und mit anderen Bestandteilen wechselwirken, sodass die Fördereigenschaften und die Abdichteigenschaften verbessert werden.

In einer weiteren Ausführungsform umfasst das Dichtmittel zumindest ein anionisches Tensid und zumindest ein nicht ionisches Tensid, wobei der Anteil des anionischen Tensids bevorzugt im Bereich von 1,15 bis 1,29 Gew.-% und der des nicht ionischen Tensids im Bereich von 0,3 bis 0,45 Gew.-% liegt. Es hat sich als besonders Vorteilhat herausgestellt, dass ein solcher Anteil zu besseren Eigenschaften in Bezug auf das Ventilverstopfen und die Abdichtleistung führt.

Gemäß der Erfindung weist das Dichtmittel einen Anteil von Kautschuklatex im Bereich von 27 Gew.-% bis 46 Gew.-%, bevorzugt im Bereich von 32 bis 44 Gew.-%, auf. Ein wesentlicher Vorteil eines solchen Latexanteils ist, dass der Latex besser abdichtet, sodass der Fahrzeugluftreifen schneller und zuverlässiger wieder einsetzbar ist.

In einer weiteren Ausführungsform der Erfindung umfasst der Kautschuklatex NR Latex oder besteht aus NR Latex. Bei dem Kautschuklatex kann es sich um einen Naturkautschuklatex (NR) aus Hevea brasiliensis oder auch um Latex aus dem Guayulestrauch (Parlhenium argentatum) handeln, wobei der Naturkautschuklatex in deprotonierter Form eingesetzt werden kann. Denkbar ist alternativ, dass der Latex synthetisch hergestellt und eingesetzt wird. Dafür ist der Einsatz verschiedener Latices im Verschnitt sowie eine Mischung aus NR und synthetischem Latex ebenfalls denkbar.

Für einer verbesserte Abdichtwirkung und eine verbesserte Haltbarkeit des Dichtmittels weist das Dichtmittel ein Harz mit einem Harzanteil im Bereich von 2,5 bis 12,5 Gew.-%, bevorzugt im Bereich von 2,5 bis 10 Gew.-%, besonders bevorzugt im Bereich von 4,5 bis 10 Gew.-%, auf. Es konnte gezeigt werden, dass das Dichtmittel zu verbesserten Eigenschaften führt und zusätzlich Kosten in der Herstellung des Dichtmittels eingespart werden können. Denkbar ist der Einsatz von natürlichen und/oder synthetischen Harzen, wie beispielsweise Kohlenwasserstoffharze.

Bevorzugt wird ein Harz eingesetzt, das eine bis zu 60 Gew.-%ige, besonders bevorzugt bis zu 50 Gew.-%ige, wässrige Dispersion (Emulsion) ist. Dies bedeutet, dass der Anteil an Feststoff in der Dispersion bezogen auf das Gesamtgewicht bei bis zu 60 Gew.-%, besonders bevorzugt bis zu 50 Gew.-%, liegt.

In einer Ausführungsform werden Klebharze verwendet, die als Klebrigmacher wirken. Beispielsweise sind dies Klebharze ausgewählt aus der Gruppe bestehend aus Kolophoniumharzen und deren Estern, Terpen-Phenol-Harzen, Alkin-Phenol-Harzen, Phenol-Harzen und CumaronInden-Harzen. Dichtmittel enthaltend solche Klebharze zeigen eine besonders hohe Klebfestigkeit mit guter Abdichtwirkung und haben einen positiven Einfluss auf die Kompatibilisierung mit anderen Komponenten im Dichtmittel. Kolophoniumharze können aus dem Baumharz verschiedener Nadelhölzer extrahiert werden und besteht im Wesentlichen aus einem Gemisch aus Harzsäuren und Terpenen. Ferner sind Terpen-Phenol-Harze solche Harze, die durch Säure-katalysierte Addition von Phenolen hergestellt werden. Als Alkin-Phenol-Harz können Harze verwendet werden, die als Alkin z. B. Ethin und als Phenolkomponente zum Beispiel Butylphenol oder Novolacke aus Formaldehyd und zum Beispiel p-tert. Butylphenol (oder p-Diisobutylphenol) enthalten. Cumaron-Inden-Harze fallen als Copolymere bei der Polymerisation der im Leichtöl des Steinkohlenteers enthaltenen ungesättigten Verbindungen an.

Das Dichtmittel weist einen Harz zu Latex Anteil in Bezug auf den Feststoffgehalt von Latex und Harz im Bereich von 4 bis 40 Gew.-%, insbesondere im Bereich von 15 bis 32 Gew.-%, auf. Es konnte überraschenderweise gezeigt werden, dass mit einem Verhältnis von Harz zu Latex unter 40 Gew.-% die Wahrscheinlichkeit eines Ventilverstopfens verringert und das Abdichten durch das Aerosol verbessert ist. Noch deutlicher ist die Auswirkung bevorzugt unter 32 Gew.-%.

In einer weiteren Ausführungsform der Erfindung umfasst das Dichtmittel zumindest ein Gefrierschutzmittel, insbesondere zumindest zwei Gefrierschutzmittel, wobei bevorzugt mindestens ein Gefrierschutzmittel mindestens ein Glykol aufweist ausgewählt aus der Gruppe bestehend aus Ethandiol und Propandiol. Vorliegend weist das Gefrierschutzmittel einen niedrigen Gefrierpunkt auf, der üblicherweise unter -10 °C liegt. In Verbindung mit Wasser liegt der Gefrierpunkt noch deutlich tiefer und kann bei der richtigen Mischung bis -55 °C erreichen. Vorteilhafterweise kann das Dichtmittel mit einem niedrigen Gefrierpunkt in kälteren Regionen eingesetzt werden, ohne dass die Pumpfähigkeit und Fließeigenschaft wesentlich beeinträchtigt wird. Besonders bevorzugt enthält das erste Gefrierschutzmittel 1,2-Ethandiol und das zweite Gefrierschutzmittel 1,2-Propandiol. Beide Gefrierschutzmittel sind mit Wasser mischbar und setzten den Gefrierpunkt herab. Ferner ist von Vorteil, dass das Dichtmittel mit einem solchen Gefrierschutzmittel umweltfreundlicher ist.

In einer weiteren Ausführungsform der Erfindung liegt der Gesamtanteil an Gefrierschutzmittel bevorzugt im Bereich von 27 bis 40 Gew.-%, wobei insbesondere der Anteil des ersten Gefrierschutzmittels im Bereich von 20 bis 25 Gew.-% und der Anteil des zweiten Gefrierschutzmittels im Bereich von 7 bis 15 Gew.-% liegt. Vorteilhafterweise ist dieser Gesamtanteil an Gefrierschutzmittel optimal für eine Gefrierpunktserniedrigung des gesamten Dichtmittel, sodass dieses auch bei geringeren Temperaturen mit einer optimalen Pumpfähigkeit und Fließeigenschaft sowie einer verbesserten Abdichteigenschaft eingesetzt werden kann.

In einer weiteren Ausführungsform der Erfindung umfasst das Dichtmittel weitere Zusatzstoffe. So können dem harzfreien Dichtmittel Alterungsschutzbeziehungsweise Konservierungsmittel zur Sicherung der Einsatzbereitschaft des Dichtmittels bei Lagerung zugesetzt werden. Außerdem oder zusätzlich kann das Dichtmittel Dispergiermittel und/oder Emulgiermittel und/oder pH-Regulatoren enthalten. Ein wesentlicher Vorteil ist, dass das harzfreie Dichtmittel eine deutlich bessere Abdichtleistung aufzeigt.

In einer bevorzugten Ausführungsform enthält das Dichtmittel 1 bis 2 Gew.-% mindestens eines Alterungsschutzmittels, insbesondere Dispersionen von sterisch und alkylierten (Poly)-Phenolen und/oder alkylierte Diphenylamine. Vorteilhafterweise kann das Dichtmittel somit länger haltbar gemacht werden.

In einer weiteren Ausführungsform umfasst das Dichtmittel Füllstoffe, die zum Abdichten, insbesondere von größeren Löchern beitragen. Beispielhaft sind faserige Materialien, insbesondere Natur- und Synthesefasern, Schichtsilikate, Kieselsäure, Talk, Kreide, Ruß, Gummimehl und Ähnliche.

Das Dichtmittel weist in einer weiteren Ausführungsform der Erfindung eine Viskosität bei 25 °C von 3 bis 23 mPa*s, insbesondere 6 bis 16 mPa*s, auf (dynamische Viskosität am Rheometer, 0,5° Kegel, 16000 U/min). Die Fließeigenschaften des Dichtmittels sind dadurch deutlich verbessert.

In einer weiteren Ausführungsform der Erfindung liegt der Wassergehalt des harzfreien Dichtmittels im Bereich von 15 bis 30 Gew.-%, insbesondere im Bereich von 20 bis 25 Gew.-%. Dabei wird ein Latex eingesetzt, das eine bis zu 85 Gew.-%ige, bevorzugt bis zu 70 Gew.-%ige, wässrige Dispersion (Emulsion) ist. Dies bedeutet, dass der Anteil an Feststoff in der Dispersion bezogen auf das Gesamtgewicht bei bis zu 85 Gew.-%, bevorzugt bis zu 70 Gew.-%, liegt. Alternativ kann der Anteil an Feststoff in der Dispersion bezogen auf das Gesamtgewicht im Bereich von 85 bis 70 Gew.-%, insbesondere im Bereich von 80 bis 75 Gew.-% liegen. Vorteilhafterweise ist das harzfreie Dichtmittel mit einem solchen Wasseranteil und/oder Feststoffanteil deutlich leistungsfähiger in Bezug auf die Abdichteigenschaften ohne die Verwendung eines Harzes.

Außerdem wird die Aufgabe der vorliegenden Erfindung durch ein Dichtmittelbehälter gelöst, aufweisend ein beschriebenes Dichtmittel, wobei der Dichtmittelbehälter eine Öffnung aufweist, durch die das harzfreie Dichtmittel in einen Fahrzeugreifen förderbar ist.

Vorteilhafterweise ist der erfindungsgemäße Dichtmittelbehälter einfach zu benutzen, da das Dichtmittel einfach aus dem Dichtmittelbehälter ausströmen kann. Denkbar ist, dass der Benutzer den Behälter manuell drücken oder quetschen kann, um das Dichtmittel in den Fahrzeugreifen zu fördern. Dazu muss der Behälter beispielsweise über einen Schlauch an das Fahrzeugreifenventil angeschlossen werden. Alternativ kann ein solcher Behälter über einen Schlauch an ein Pannenhilfeset angeschlossen werden. Ein Ausquetschen des Dichtmittels in ein Pannenhilfeset ist ebenfalls denkbar, wobei das Pannenhilfeset dazu ausgebildet ist, mit Hilfe eines Kompressors Druckluft zu erzeugen, die das Dichtmittel in den Fahrzeugreifen fördert. Ein wesentlicher Vorteil ist, dass der Dichtmittelbehälter mit einem verbesserten Dichtmittel eine bessere Einsetzbarkeit aufweist, da das Dichtmittel ein besseres diametrales Verhalten bezüglich der Eigenschaften Ventilverstopfen und Abdichtleistung aufzeigt.

Die Ausführungen und Vorteile in Bezug auf das Dichtmittel gelten, vice versa, ebenfalls in Bezug auf das Dichtmittel, welches der Dichtmittelbehälter umfasst.

In einer Ausführungsform der Erfindung ist der Dichtmittelbehälter mit einem Pannenhilfeset verbindbar. Dafür weist der Dichtmittelbehälter einen Anschluss auf, der mit einem Pannenhilfeset beispielsweise durch einen Steck- oder Drehmechanismus verbunden werden kann. Vorteilhafterweise kann ein solcher Dichtmittelbehälter an ein Pannenhilfeset angeschlossen werden, was die Bedienung des Benutzers erheblich vereinfacht. Es hat sich ferner herausgestellt, dass der Dichtmittelbehälter umfassend das Dichtmittel zu einem deutlich besseren diametralen Verhalten bezüglich der Eigenschaften Ventilverstopfen und Abdichtleistung führt.

Weiterhin wird die Aufgabe der vorliegenden Erfindung durch ein Verfahren zum provisorischen Abdichten eines Fahrzeugluftreifens unter Verwendung wenigstens eines beschriebenen Dichtmittels. Ein solches Verfahren erleichtert dem Benutzer das Abdichten eines Fahrzeugluftreifens, da das diametrale Verhalten bezüglich der Eigenschaften Ventilverstopfen und Abdichtleistung des Dichtmittels wesentlich verbessert wurde.

Die Ausführungen und Vorteile in Bezug auf das Dichtmittel und den Dichtmittelbehälter gelten, vice versa, ebenfalls für das erfindungsgemäße Verfahren.

In einer Ausführungsform des erfindungsgemäßen Verfahrens wird das Dichtmittel durch ein Ventil des Fahrzeugluftreifens eingesprüht. Dies kann insbesondere durch ein Pannenhilfeset erfolgen, wobei das Pannenhilfeset einen Kompressor umfasst, durch den Druckluft erzeugt wird. Die erzeugte Druckluft befördert das Dichtmittel über einen Schlauch in den Fahrzeugreifen.

Ferner betrifft die Erfindung die Verwendung eines beschriebenen Dichtmittels in einem Pannenhilfeset für einen Fahrzeugluftreifen.

Weitere Vorteile und Merkmale des erfindungsgemäßen harzfreien Dichtmittels sowie des Dichtmittebehälters und des Verfahrens ergeben sich nebst der Beschreibung zusätzlich aus den Unteransprüchen, die sich auf vorteilhafte Ausgestaltungen der vorliegenden Erfindung beziehen und als solche nicht einschränkend zu verstehen sind. Von der Erfindung mit umfasst sind auch Kombinationen der Merkmale verschiedener Unteransprüche, auch wenn sich die Unteransprüche nicht aufeinander beziehen oder wenn diese verschiedenen Anspruchskategorien zugehören. Ferner sind auch Kombinationen von bevorzugten und besonders bevorzugten Ausführungsformen untereinander miteinander kombinierbar. Dies gilt auch für die einzelnen Merkmale der nachfolgenden diskutierten Ausführungsbeispiele, soweit dies nicht für den Fachmann als zwingend zueinander gehörig erkennbar sind.

Im Sinne der Erfindung wurden folgende Substanzen eingesetzt, wobei sich die Erfindung nicht auf diese beschränken soll. Diese Substanzen sollen lediglich beispielhaft angeführt werden:
Naturkautschuklatex: 60 Gew.-% Feststoffgehalt, LATZ Naturlatex, z.B. Weber & Schaer
Klebharz: Kolophoniumester, 50 Gew.-% Feststoffgehalt, Tacolyn, Eastman Chemical Company und/oder Aromatisch modifiziertes Terpenharz, Nanolet TO, Yasuhara chemical Co. Ltd
Anionisches Tensid: anionisches Disulfonat, 51 Gew.-% aktiver Feststoffgehalt. Sterisches Tensid: Natriumtrialkylphenolpolyethylenglykolethersulfat, 25 Gew.-% aktiver Feststoffgehalt.

## Patentansprüche

1. Dichtmittel zum provisorischen Abdichten von Fahrzeugluftreifen,
**dadurch gekennzeichnet, dass**
das Dichtmittel einen Anteil von 27 bis 46 Gew.-% eines Kautschuklatex, einen Anteil von 2,5 bis 12,5 Gew.-% eines Harz und ein Tensid enthält,
wobei der Feststoffgehalt des Harz in Bezug auf den Feststoffgehalt von Latex und Harz im Bereich von 4 bis 40 Gew.-% liegt und
wobei der Feststoffgehalt des Tensids im Bereich von 6,5 bis 12 Gew.-% im Verhältnis zum Feststoffgehalt des Kautschuklatex liegt.

2. Dichtmittel nach Anspruch 1, **dadurch gekennzeichnet, dass** der Feststoffgehalt des Tensids im Bereich von 7 bis 11 Gew.-%, insbesondere im Bereich von 8 bis 10 Gew.-%, liegt.

3. Dichtmittel nach Anspruch 1 oder 2, **dadurch gekennzeichnet, dass** das mindestens eine Tensid ein Block-Copolymer von Propylenoxid und Ethylenoxid umfasst, wobei der Anteil an Ethylenoxid bevorzugt 40 Gew.-% beträgt.

4. Dichtmittel nach einem der vorherigen Ansprüche, **dadurch gekennzeichnet, dass** das Dichtmittel zumindest ein anionisches Tensid und zumindest ein nicht ionisches Tensid umfasst, wobei der Anteil des anionischen Tensids bevorzugt im Bereich von 1,15 bis 1,29 Gew.-% und der des nicht ionischen Tensids im Bereich von 0,3 bis 0,45 Gew.-% liegt.

5. Dichtmittel nach einem der vorherigen Ansprüche, **dadurch gekennzeichnet, dass** das Dichtmittel einen Anteil von Kautschuklatex im Bereich von 32 bis 44 Gew.-%, aufweist.

6. Dichtmittel nach einem der vorherigen Ansprüche, **dadurch gekennzeichnet, dass** das Dichtmittel zumindest ein Gefrierschutzmittel, insbesondere zumindest zwei Gefrierschutzmittel, umfasst, wobei insbesondere mindestens ein Gefrierschutzmittel mindestens ein Glykol aufweist, ausgewählt aus der Gruppe bestehend aus Ethandiol und Propandiol.

7. Dichtmittelbehälter aufweisend ein Dichtmittel nach einem der vorherigen Ansprüche, **dadurch gekennzeichnet, dass** der Dichtmittelbehälter eine Öffnung aufweist, durch die das Dichtmittel in einen Fahrzeugreifen förderbar ist.

8. Verwendung eines Dichtmittels nach einem der Ansprüche 1 bis 6 oder eines Dichtmittelbehälters nach Anspruch 7 zum provisorischen Abdichten eines Fahrzeugluftreifens.

9. Pannenhilfeset, umfassend den Dichtmittelbehälter nach Anspruch 7.

## Claims

1. Sealant for temporary sealing of pneumatic vehicle tyres,
**characterized in that**
the sealant contains a proportion of 27% to 46% by weight of a rubber latex, a proportion of 2.5% to 12.5% by weight of a resin and a surfactant,
wherein the solids content of the resin based on the solids content of latex and resin is in the range from 4% to 40% by weight and
wherein the solids content of the surfactant is in the range from 6.5% to 12% by weight based on the solids content of the rubber latex.

2. Sealant according to Claim 1, **characterized in that** the solids content of the surfactant is in the range from 7% to 11% by weight, especially in the range from 8% to 10% by weight.

3. Sealant according to Claim 1 or 2, **characterized in that** the at least one surfactant comprises a block copolymer of propylene oxide and ethylene oxide, wherein the proportion of ethylene oxide is preferably 40% by weight.

4. Sealant according to any of the preceding claims, **characterized in that** the sealant comprises at least one anionic surfactant and at least one non-ionic surfactant, wherein the proportion of the anionic surfactant is preferably in the range from 1.15% to 1.29% by weight and that of the non-ionic surfactant is in the range from 0.3% to 0.45% by weight.

5. Sealant according to any of the preceding claims, **characterized in that** the sealant comprises a proportion of rubber latex in the range from 32% to 44% by weight.

6. Sealant according to any of the preceding claims, **characterized in that** the sealant comprises at least one antifreeze, especially at least two antifreezes, wherein especially at least one antifreeze comprises at least one glycol selected from the group consisting of ethanediol and propanediol.

7. Sealant container comprising a sealant according to any of the preceding claims, **characterized in that** the sealant container comprises an opening through which the sealant is conveyable into a vehicle tyre.

8. Use of a sealant according to any of Claims 1 to 6 or of a sealant container according to Claim 7 for temporary sealing of a pneumatic vehicle tyre.

9. Tyre repair kit comprising the sealant container according to Claim 7.

## Revendications

1. Agent d'étanchéité destiné à obturer provisoirement des pneus de véhicule, **caractérisé en ce que**
l'agent d'étanchéité contient une proportion de 27 à 46% en poids d'un latex de caoutchouc, une proportion de 2,5 à 12,5% en poids d'une résine et un tensioactif, la teneur en solides de la résine par rapport à la teneur en solides du latex et de la résine se situant dans la plage de 4 à 40% en poids et
la teneur en solides du tensioactif se situant dans la plage de 6,5 à 12% en poids par rapport à la teneur en solides du latex de caoutchouc.

2. Agent d'étanchéité selon la revendication 1, **caractérisé en ce que** la teneur en solides du tensioactif se situe dans la plage de 7 à 11% en poids, en particulier dans la plage de 8 à 10% en poids.

3. Agent d'étanchéité selon la revendication 1 ou 2, **caractérisé en ce qu'**au moins un tensioactif comprend un copolymère séquencé d'oxyde de propylène et d'oxyde d'éthylène, la proportion d'oxyde d'éthylène représentant de préférence 40% en poids.

4. Agent d'étanchéité selon l'une des revendications précédentes, **caractérisé en ce que** l'agent d'étanchéité comprend au moins un tensioactif anionique et au moins un tensioactif non ionique, la proportion du tensioactif anionique se situant de préférence dans la plage de 1,15 à 1,29% en poids et celle du tensioactif non ionique se situant dans la plage de 0,3 à 0,45% en poids.

5. Agent d'étanchéité selon l'une des revendications précédentes, **caractérisé en ce que** l'agent d'étanchéité présente une proportion de latex de caoutchouc dans la plage de 32 à 44% en poids.

6. Agent d'étanchéité selon l'une des revendications précédentes, **caractérisé en ce que** l'agent d'étanchéité comprend au moins un agent antigel, en particulier au moins deux agents antigel, en particulier au moins un agent antigel présentant au moins un glycol choisi dans le groupe constitué par l'éthanediol et le propanediol.

7. Récipient d'agent d'étanchéité présentant un agent d'étanchéité selon l'une des revendications précédentes, **caractérisé en ce que** le récipient à agent d'étanchéité présente une ouverture à travers laquelle l'agent d'étanchéité peut être amené dans un pneu de véhicule.

8. Utilisation d'un agent d'étanchéité selon l'une des revendications 1 à 6 ou d'un récipient d'agent d'étanchéité selon la revendication 7 pour l'obturation provisoire d'un pneu de véhicule.

9. Kit de dépannage comprenant le récipient d'agent d'étanchéité selon la revendication 7.
